# DEMANDE DE BREVET EUROPEEN

(11) **EP 3 332 897 A1**
(43) Date de publication de la demande: **13.06.2018**
(21) Numéro de dépôt: 16203041.5
(22) Date de dépôt: 08.12.2016
(51) Int. Cl.: B22F 3/22, G04D 3/00, G04B 37/22

(54) **LIANT POUR COMPOSITION DE MOULAGE PAR INJECTION**

(71) Demandeur: The Swatch Group Research and Development Ltd, 2074 Marin (CH)
(72) Inventeur: Rodriguez, Pablo, 2000 Neuchâtel (CH)
(74) Mandataire: Ravenel, Thierry Gérard Louis

(57) **Abrégé**

Liant pour composition de moulage par injection comprenant :
- de 45 à 50% en volume d'une base polymérique,
- au moins 34 % en volume d'un mélange de cires ou un mélange de cire et d'huile de palme,
- et de 11 à 16 % en volume d'un surfactant,
dans lequel la base polymérique contient des copolymères d'éthylène et d'acide méthacrylique ou acrylique, ou des copolymères d'éthylène comprenant un anhydride maléique ou un mélange de ces copolymères, ainsi que du polyéthylène, du polypropylène et une résine acrylique, les quantités respectives des composants du liant étant telles qu'additionnées entre elles, elles ne dépassent pas les 100% en volume.

## Description

### Domaine de l'invention

L'invention concerne une composition de liant pour moulage par injection ainsi qu'une composition de moulage par injection (feedstock) destinée à la fabrication de pièces de forme métalliques.

### Arrière-plan de l'invention

Dans la fabrication de matériaux durs pour la bijouterie et l'industrie horlogère, ou encore pour des applications techniques telles que le médical, l'électronique, la téléphonie, l'outillage, les plaquettes de coupe d'usinage, l'industrie des biens de consommation, on met en oeuvre des techniques de métallurgie des poudres. On appellera ici « métal » le matériau de synthèse inorganique obtenu, quelle que soit la nature du métal ou de l'alliage métallique. Les matières premières de base sont de différente nature, de façon générale, et comportent au moins d'une part de la poudre de métal et d'autre part des liants organiques, tels que résines ou matières plastiques ou similaires qui permettent l'injection et la bonne tenue mécanique du composant réalisé avec le mélange de l'ensemble des matières premières. D'autres additifs peuvent être incorporés au mélange. Ces matières premières peuvent également être de différentes textures: solide, pulvérulente, liquide, ou encore pâteuse. Le mélange peut en outre changer de structure au cours de son élaboration, en particulier, et non limitativement, quand des composants complémentaires d'une résine subissent une réaction de polymérisation.

Le procédé global de fabrication d'un composant métallique par la technologie des poudres comporte au moins les étapes suivantes :
- préparation des matières premières ;
- mélange(s) des matières premières, ou/et pré-mélange deux à deux (ou plus) si nécessaire ;
- malaxage d'homogénéisation ;
- granulation ;
- pressage, notamment dans une chambre de moulage, d'une quantité de poudre ou de granulés feedstock issue du malaxage et de la granulation, pour la réalisation d'une ébauche de composant. Ce pressage peut être réalisé par injection, sous pression, notamment dans un injecteur à vis comportant des moyens de mise en température de cette quantité de poudre ou de granulés feedstock issue du malaxage et de la granulation;
- étuvage de déliantage pour la combustion ou/et la dissolution de certains composants du mélange;
- traitement thermique de l'ébauche en sortie de déliantage, pour le frittage donnant sa cohérence finale au composant fini. Ce traitement thermique entraîne un retrait dimensionnel, qui permet l'obtention d'un composant en cotes finies ;
- traitement de finition d'aspect du composant.

L'invention vise plus particulièrement à proposer un liant pour composition de moulage par injection optimisé facilitant le malaxage en métallurgie des poudres pour l'obtention de métaux, de façon à obtenir une production de pièces métalliques de formes complexes et présentant une qualité très reproductible, avec un coefficient de retrait maîtrisé.

On connaît déjà des matériaux thermoplastiques (feedstock) pour la fabrication de pièces moulées métalliques qui contiennent une poudre métallique frittable et un liant organique polymérique, celui-ci étant essentiellement constitué d'un mélange de polyoxyméthylène et de copolymères de polyoxyméthylène et de polyoxolanes, de tels matériaux (feedstocks) sont par exemple vendus par la société BASF sous la désignation commerciale Catamold®.

Ces feedstocks ont révélé toutefois de nombreux inconvénients, comme par exemple une fluidité insuffisante en moulage par injection limitant de fait la complexité des pièces réalisables par ce moyen et obligeant parfois à des reprises mécaniques coûteuses, et des problèmes de tenue mécanique des pièces de formes moulées qui présentent des fissures et du feuilletage, ceci surtout lorsque la forme des pièces est critique; ils sont en outre responsables de problèmes environnementaux dus à la nécessité d'utiliser des produits agressifs, tels que l'acide nitrique, plus particulièrement pour l'élimination de la phase organique lors de l'étape de déliantage.

On connait par ailleurs du brevet CH707572 un liant pour composition de moulage par injection comportant une base polymérique, un mélange de cires et/ou d'huile de palme et un surfactant. Avec une telle composition de liant, le déliantage se fait selon deux étapes distinctes successives à savoir selon une première étape de déliantage partiel à l'aide d'un solvant suivi d'une deuxième étape de déliantage thermique. Au cours de la première étape de déliantage on élimine les composants du liant solubles dans le solvant à savoir le mélange de cires et le surfactant ainsi les résines acryliques. Cette opération est réalisée en pratique en lot dans une étuve contenant les pièces vertes et les solvants appropriés. Le lot est ensuite placé dans un four en batch dans lequel les composants du liant non dissouts dans l'étape de déliantage chimique sont éliminés généralement en portant les pièces « vertes » à une température de l'ordre de 600°C. Une fois déliantées, c'est-à-dire notamment purgées des éléments organiques, et seulement à ce moment, les pièces sont frittées dans le même four en les portant à une température de l'ordre de 1200°C.

Cette technique de fabrication en lots donne de bons résultats mais la manipulation des lots successifs ne permet pas d'atteindre des cadences de production satisfaisantes avec les installations existantes.

En conséquence, le but de la présente invention consiste à fournir un liant pour composition de moulage par injection qui obvie aux inconvénients susmentionnés, et plus particulièrement qui vise à améliorer l'homogénéité et la fluidité du feedstock pour permettre la fabrication de pièces métalliques de formes plus complexes, de réduire les temps de cycle en production, de limiter voire supprimer les reprises mécaniques, et enfin qui supprime la nécessité d'utiliser des produits agressifs pour l'environnement pour l'élimination du liant organique, en remplaçant ceux-ci par des solvants non polluants pouvant être éliminés par simple traitement thermique.

### Résumé de l'invention

L'invention a donc pour objet un liant pour composition de moulage par injection comprenant :
- de 45 à 50% en volume d'une base polymérique,
- au moins 34% en volume d'un mélange de cires ou un mélange de cire et d'huile de palme,
- et de 11 à 16 % en volume d'un surfactant,
dans lequel la base polymérique contient des copolymères d'éthylène et d'acide méthacrylique ou acrylique, ou des copolymères d'éthylène comprenant un anhydride maléique ou un mélange de ces copolymères, ainsi que du polyéthylène, du polypropylène et une résine acrylique, les quantités respectives des composants du liant étant telles qu'additionnées entre elles, elles ne dépassent pas les 100% en volume et de préférence égales à 100% en volume.

Grâce à ces caractéristiques l'étape de déliantage thermique peut être raccourcie et permet par exemple d'utiliser un four à bande et ainsi d'optimiser les cadences de production tout en s'assurant que le déliantage soit bien complétement effectué avant l'opération de frittage. En utilisant des installations du type de fours à bande on peut donc combiner l'étape de déliantage thermique et de frittage en continu dans une même installation et ce faisant d'augmenter la cadence de production des pièces et par là même en diminuer les coûts de production.

De préférence, le liant de l'invention comprend de 4 à 5 % en volume d'un desdits copolymères ou de leurs mélanges, entre 25 % et 30% en volume de polyéthylène, 3 à 5 % en volume de polypropylène et de 8 à 10% en volume de résine acrylique.

De préférence, le copolymère d'éthylène et d'acide méthacrylique ou acrylique contient de 3 à 10 % pds. de comonomère méthacrylique ou acrylique, et le copolymère d'éthylène et d'anhydride est un copolymère statistique (*random*) d'éthylène et d'anhydride maléique ayant un point de fusion de 100 à 110°C ou un copolymère de polyéthylène HD et d'un anhydride modifié ayant une point de fusion de 130 à 134°C.

De préférence, la résine acrylique présente un poids moléculaire compris entre 50000 et 220000 et une viscosité inhérente de 0,21 à 0,83, et est choisie parmi le groupe comprenant les polymères méthacrylate d'isobutyle, de méthyle, d'éthyle et de N-butyle, et les copolymères méthacrylates d'isobutyle et de N-butyle et méthacrylates de méthyle et de N-butyle ou un mélanges de ces polymères et/ou copolymères. La viscosité inhérente correspond à la viscosité d'une solution contenant 0,25g de polymère dans 50ml de chlorure de méthylène mesuré à 20°C en utilisant un viscosimètre No 50 Cannon - Fenske.

De manière avantageuse, le mélange de cires comprend une cire de Carnauba et une cire de paraffine ou le mélange de cire comprend une cire de Carnauba et une huile de palme.

Selon une autre caractéristique préférée, le surfactant est un NN'-éthylène-bis(stéaramide) ou un mélange d'acides stéarique et palmitique (stéarine), ou un mélange de ces éléments.

Selon une caractéristique avantageuse, le surfactant et les résines acryliques sont solubles dans l'alcool isopropylique et/ou l'essence de térébenthine.

L'invention a également pour objet une composition de moulage par injection (feedstock) destinée à la fabrication de pièces de forme métalliques comprenant 70 à 80% vol. d'une poudre métallique et 20 à 30% vol. du liant comprenant :
- de 45 à 50% en volume d'une base polymérique,
- au moins 34% en volume d'un mélange de cires ou un mélange de cire et d'huile de palme,
- et de 11 à 16 % en volume d'un surfactant,
dans lequel la base polymérique contient des copolymères d'éthylène et d'acide méthacrylique ou acrylique, ou des copolymères d'éthylène comprenant un anhydride maléique ou un mélange de ces copolymères, ainsi que du polyéthylène, du polypropylène et une résine acrylique, les quantités respectives des composants du liant étant telles qu'additionnées entre elles, elles ne dépassent pas les 100% en volume et de préférence étant égales à 100% en volume.

Selon une caractéristique particulière, la poudre métallique de la composition de moulage par injection peut être choisie parmi l'ensemble comprenant une poudre de tungstène métallique, une poudre d'acier inoxydable, une poudre de titane métallique, une poudre de métaux nobles tels que l'or, le platine, l'argent, le palladium, le rhodium et le Ruthénium ou un mélange de ces poudres métalliques.

### Description détaillée d'un mode préféré de l'invention

La présente invention sera maintenant illustrée plus en détails par l'exemple non limitatif suivant.

On mélange la partie polymérique du liant à une poudre d'acier inoxydable (typiquement une poudre d'acier 316L) à une température d'environ 150°C pour former un prémix. A ce prémix sont ajoutés les cires et le surfactant, et la température est à nouveau augmentée jusqu'à environ 180 °C pour former une sorte de pâte homogène. Cette pâte est alors refroidie et broyée simultanément jusqu'à température ambiante pour former une poudre. Cette poudre alimente ensuite une calandreuse qui cisaille et granule le prémix. Le produit de cette dernière étape est conservé pour constituer le feedstock utilisable dans la fabrication d'une pièce de forme par injection selon une technique connue.

Dans cet exemple, on a utilisé plus particulièrement 46,5 kg de la poudre métallique d'acier inoxydable (316L) (78 % vol.) et 3.5 kg du liant (env. 22 % vol) ayant la composition volumique suivante:
- 28 % de polyéthylène HD
- 4 % de polypropylène
- 4,5 % de copolymère d'éthylène et d'acide méthacrylique (à 6,5 % pds. d'acide méthacrylique, par exemple du type "Nucrel (TM)" de DuPont)
- 8,5 % d'une résine polymère méthacrylate d'iso-butyle ayant un poids moléculaire de 195'000 (par exemple du type "Elvacite (TM) 2045" de Lucite International)
- 1 % d'une résine copolymère méthacrylate d'isobutyle et N-butyle ayant un poids moléculaire de 165'000 (par exemple du type "Elvacite (TM) 2046" de Lucite International)
- 9 % de cire Carnauba
- 31 % d'une cire de paraffine (par exemple du type "Carisma 56 T (TM)" de Alpha Wax BV)
- 14% de bis-stéaramide de N, N'-éthylène

## Revendications

1. Liant pour composition de moulage par injection comprenant :
- de 45 à 50% en volume d'une base polymérique,
- au moins 34% en volume d'un mélange de cires ou un mélange de cire et d'huile de palme,
- et de 11 à 16 % en volume d'un surfactant,
dans lequel la base polymérique contient des copolymères d'éthylène et d'acide méthacrylique ou acrylique, ou des copolymères d'éthylène comprenant un anhydride maléique ou un mélange de ces copolymères, ainsi que du polyéthylène, du polypropylène et une résine acrylique, les quantités respectives des composants du liant étant telles qu'additionnées entre elles, elles ne dépassent pas les 100% en volume.

2. Liant selon la revendication 1 comprenant de 4 à 5 % en volume d'un desdits copolymères ou de leurs mélanges, entre 25 % et 30% en volume de polyéthylène, 3 à 5 % en volume de polypropylène et de 8 à 10% en volume de résine acrylique.

3. Liant selon la revendication 1 ou la revendication 2, dans lequel le copolymère d'éthylène et d'acide méthacrylique ou acrylique contient de 3 à 10 % pds. de comonomère méthacrylique ou acrylique, et le copolymère d'éthylène et d'anhydride est un copolymère statistique (*random*) d'éthylène et d'anhydride maléique ayant un point de fusion de 100 à 110°C ou un copolymère de polyéthylène HD et d'un anhydride modifié ayant une point de fusion de 130 à 134°C.

4. Liant selon l'une des revendications précédentes, dans lequel la résine acrylique présente un poids moléculaire compris entre 50000 et 220000 et une viscosité inhérente de 0,21 à 0,83 et est choisie parmi le groupe comprenant les polymères méthacrylate d'isobutyle, de méthyle, d'éthyle et de N-butyle, et les copolymères méthacrylates d'isobutyle et de N-butyle et méthacrylates de méthyle et de N-butyle ou un mélanges de ces polymères et/ou copolymères.

5. Liant selon l'une des revendications précédentes, dans lequel le mélange de cires comprend une cire de Carnauba et une cire de paraffine ou le mélange de cire comprend une cire de Carnauba et une huile de palme.

6. Liant selon l'une des revendications précédentes, dans lequel le surfactant est un NN'-éthylène-bis(stéaramide), ou un mélange d'acides stéarique et palmitique (stéarine), ou un mélange de ces éléments.

7. Liant selon l'une des revendications précédentes dans lequel le surfactant et les résines acryliques sont solubles dans l'alcool isopropylique et/ou l'essence de térébenthine.

8. Composition de moulage par injection (feedstock) destinée à la fabrication de pièces de forme métalliques comprenant 70 à 80% vol. d'une poudre métallique et 20 à 30% vol. du liant selon l'une des revendications 1 à 7.

9. Composition de moulage selon la revendication 8, dans laquelle la poudre métallique est choisie parmi l'ensemble comprenant une poudre de tungstène métallique, une poudre d'acier inoxydable, une poudre de titane métallique, une poudre de métaux nobles choisis parmi l'ensemble comprenant l'or, le platine, l'argent, le palladium, le rhodium et le Ruthénium, ou un mélange de ces poudres métalliques.
